# EUROPEAN PATENT APPLICATION

(11) **EP 1 202 362 A2**
(43) Date of publication of application: **02.05.2002**
(21) Application number: 01124993.5
(22) Date of filing: 19.10.2001
(51) Int. Cl.: H01M 4/50, H01M 10/40, C01G 45/00

(54) **Method for producing cathode active material and method for manufacturing a nonaqueous electrolyte battery**

(30) Priority: 23.10.2000 JP 2000323214
(71) Applicant: SONY CORPORATION, Tokyo (JP)
(72) Inventor: Sakai, Hideki, Shinagawa-ku, Tokyo (JP); Fukushima, Yuzuru, Shinagawa-ku, Tokyo (JP); Takahashi, Kimio, Shinagawa-ku, Tokyo (JP); Hosoya, Mamoru, Shinagawa-ku, Tokyo (JP)
(74) Representative: Müller . Hoffmann & Partner Patentanwälte

(57) **Abstract**

A method for producing a cathode active material which produces a spinel type lithium manganese oxide expressed by a general formula: Li₁₊ₓMn_{2-x-y}Me_{y}O₄, as the cathode active material, (here, x is expressed by a relation of 0 ≤ x < 0.15 and y is expressed by a relation of 0 < y < 0.3, and Me is at least one kind of element selected from between Co, Ni, Fe, Cr, Mg and Al). The method comprises a mixing step of mixing raw materials of the spinel type lithium manganese oxide to obtain a precursor; and a sintering step of sintering the precursor obtained in the mixing step to obtain the spinel type lithium manganese oxide. The sintering temperature in the sintering step is located within a range of 800°C or higher and 900°C or lower. Accordingly, even when manganese which is inexpensive and abundant in resources is employed as a main material, an excellent cathode performance can be maintained under the environment.

## Description

### BACKGROUND OF THE INVENTION

### Field of the Invention

The present invention relates to a method for producing a cathode active material using a spinel type lithium manganese oxide and a method for manufacturing a nonaqueous electrolyte battery using the cathode active material.

### Description of the Related Art

In recent years, with the rapid progress of various kinds of electronic devices, the study of a secondary battery which can be recharged has been vigorously advanced as a battery which can be conveniently and economically used for a long time. As representative secondary batteries, there have been known a lead-acid battery, an alkaline storage battery, a lithium secondary battery, etc. Especially, the lithium secondary battery among these secondary batteries has advantages in respect of high output and high energy density or the like.

The lithium secondary battery comprises a cathode using a cathode active material which performs a reversible electrochemical reaction with lithium ions, an anode using an anode active material including lithium metal or lithium, and nonaqueous electrolyte solution. Generally, the elution of the lithium ions is generated in the nonaqueous electrolyte solution in the anode, and the lithium ions are intercalated into between the layers of the cathode active material in the cathode so that the discharging reaction of the lithium secondary battery is advanced. Further, in the charging reaction of the lithium secondary battery, a reverse reaction to the above is advanced to deintercalate the lithium ions from the cathode. Therefore, in the lithium secondary battery, the charging and discharging reactions are repeated in accordance with the reactions that the lithium ions supplied from the anode intercalate into or deintercalate from the cathode active material.

Ordinarily, as the anode active materials of the lithium secondary battery, there have been employed lithium metal, a lithium alloy such as Li-Al alloy, a conductive polymer with which the lithium is doped such as polyacetylene or polypyrrole, etc, an intercalation compound having lithium ions taken into a crystal, etc.

On the other hand, as the cathode active materials of the lithium secondary battery, metal oxides, metal sulfides or polymers, etc. are employed. For instance, there have been known TiS₂, MoS₂, NbSe₂, V₂O₅, etc. In recent years, a nonaqueous electrolyte secondary battery using lithium cobalt oxide expressed by LiₓCo_{y}O₂(here, a value of x changes depending on charging and discharging operations, however, x and y are generally respectively about 1 at the time of synthesis) as the cathode active material having a high discharging potential and energy density has been put to practical use.

However, Co, which is the raw material of the lithium cobalt oxide, is rare resources, and the mineral deposits of Co which are commercially available are maldistributed in a small number of countries, so that Co is expensive and its price fluctuation is great. Further, the supply of Co is inconveniently unstable in future.

Therefore, as the cathode active material composed of a raw material which is more inexpensive than Co and richer as resources than Co and not inferior to the lithium cobalt oxide in respect of its performance, the use of lithium nickel oxide expressed by LiNiO₂ or lithium manganese oxide expressed by LiMn₂O₄ has been investigated.

Especially, Mn is a material more inexpensive than Ni as well as Co and rich in view of resources. Further, since a large quantity of manganese dioxide is circulated as the raw material of a manganese dry cell, an alkaline manganese dioxide cell and a lithium primary battery, Mn is expected to be stably supplied as the material. Therefore, in recent years, the study of the lithium manganese oxide using Mn as the main raw material has been energetically performed as the cathode active material of the nonaqueous electrolyte secondary battery. Specially, the lithium manganese oxide having a spinel structure is electrochemically oxidized, so that it is recognized that the obtained product is a material exhibiting a potential of 3V or higher relative to lithium and having a theoretical charging and discharging capacity of 148 mAh/g.

However, when manganese oxide or the lithium manganese oxide is employed as the cathode active material of the nonaqueous electrolyte secondary battery, a battery performance is undesirably deteriorated in accordance with charging and discharging cycles. Specially, the above described battery performance is excessively deteriorated under high temperature, that is, under a temperature environment exceeding room temperature.

The problem that the battery performance is deteriorated under the environment of high temperature constitutes a problem to which a special attention is to be paid in the case of a large nonaqueous electrolyte secondary battery for an electric motorcar, load leveling or the like. This problem is generated, because, as the nonaqueous electrolyte secondary battery is more enlarged, a possibility that the temperature of the inner part of the battery becomes relatively high due to the internal heat generation upon its use, even when ambient environmental temperature is near room temperature. Further, the problem that the battery performance is deteriorated under the environment of high temperature is not limited to the large nonaqueous electrolyte secondary battery as described above, and a relatively compact nonaqueous electrolyte secondary battery employed for a portable device or the like may not be also neglected, when considering, for instance a fact that the nonaqueous electrolyte secondary battery is used under the environment of high temperature such as in the interior of an automobile in midsummer.

### SUMMARY OF THE INVENTION

With the above described circumstances into consideration, the present invention was proposed and it is an object of the present invention is to provide a method for producing a cathode active material for maintaining an excellent cathode performance under an environment of high temperature even when Mn which is inexpensive and abundant resources is used as a main raw material. Further, it is another object of the present invention to provide a method for manufacturing a nonaqueous electrolyte battery which maintains an excellent battery performance under an environment of high temperature.

In order to achieve the above described objects, according to the present invention, there is provided a method for producing a cathode active material which produces a spinel type lithium manganese oxide expressed by a general formula Li₁₊ₓMn_{2-x-y}Me_{y}PO₄, as the cathode active material, where x is expressed by a relation of 0 ≤ x < 0.15 and y is expressed by a relation of 0 < y < 0.3, and Me is at least one kind of element selected from a group consisting of Co, Ni, Fe, Cr, Mg and Al, the method comprising a mixing step of mixing raw materials of the spinel type lithium manganese oxide to obtain a precursor, and a sintering step of sintering the precursor obtained in the mixing step to obtain the spinel type lithium manganese oxide, wherein sintering temperature in the sintering step is located within a range of 800°C or higher and 900°C or lower.

In the method for producing the cathode active material defined as described above, since the sintering temperature is located within a range of 800°C or higher and 900°C or lower, the spinel type lithium manganese oxide a good cathode performance of which can be maintained even when it is used under an environment of temperature exceeding room temperature can be synthesized.

Further, according to the present invention, there is provided a method for manufacturing a nonaqueous electrolyte battery including a cathode having a spinel type lithium manganese oxide expressed by a genera] formula Li₁₊ₓMn_{2-x-y}Me_{y}PO₄ serving as a cathode active material, where, x is expressed by a relation of 0 ≤ x < 0.15 and y is expressed by a relation of 0 < y < 0.3, and Me is at least one kind of element selected from a group consisting of Co, Ni, Fe, Cr, Mg and Al, an anode, and an electrolyte, the method comprising a mixing step of mixing raw materials of the spinel type lithium manganese oxide to obtain a precursor, and a sintering step of sintering the precursor obtained in the mixing step to obtain the spinel type lithium manganese oxide, wherein sintering temperature in the sintering step is located within a range of 800°C or higher and 900°C or lower.

In the method for manufacturing the nonaqueous electrolyte battery defined as described above, since the sintering temperature is located within a range of 800°C or higher and 900°C or lower in the sintering step for producing the cathode active material, the spinel type lithium manganese oxide a good cathode performance of which can be maintained even when it is used under an environment of temperature exceeding room temperature can be synthesized. Accordingly, the obtained spinel type lithium manganese oxide is employed as the cathode active material so that the nonaqueous electrolyte battery excellent in battery property under the environment of high temperature can be manufactured.

### BRIEF DESCRIPTION OF THE DRAWING

Other characteristics will appear on reading the description which follows in reference to the accompanying drawing in which:

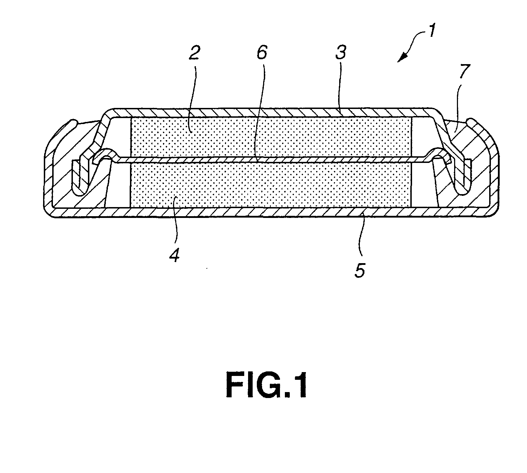

Fig. 1 is a sectional view showing one structural form of a nonaqueous electrolyte battery manufactured according to the present invention.

### DETAILED DESCRIPTION OF THE PREFERRED EMBODIMENTS

Now, specific embodiments of a method for producing a cathode active material and a method for manufacturing a nonaqueous electrolyte battery to which the present invention is applied will be described in detail by referring to the accompanying drawing.

A structural example of a nonaqueous electrolyte battery manufactured by applying the present invention thereto is shown in Fig. 1. The nonaqueous electrolyte battery 1 comprises an anode 2, an anode can 3 for accommodating the anode 2, a cathode 4, a cathode can 5 for accommodating the cathode 4, a separator 6 interposed between the cathode 4 and the anode 2 and an insulating gasket 7. The anode can 3 and the cathode can 5 are filled with nonaqueous electrolyte solution.

As an anode active material contained in the anode 2, for instance, a lithium-aluminum alloy, a carbonaceous material capable of being doped with or dedoped from lithium ions or the like can be used. Further, as the anode 2, lithium metal can be directly employed.

The anode can 3 serves to accommodate the anode 2 therein and serves as an external anode of the nonaqueous electrolyte battery 1.

The cathode 4 has a cathode composite mixture layer including a cathode active material formed on a cathode current collector. In the nonaqueous electrolyte battery 1, as the cathode active material, is employed a spinel type lithium manganese oxide expressed by a general formula: Li₁₊ₓMn_{2-x-y}Me_{y}PO₄ obtained by replacing a part of Mn of LiMn₂O₄ by a different metal Me (here, x is expressed by a relation of 0 ≤ x < 0.15 and y is expressed by a relation of 0 < y < 0.3, and Me is at least one kind of element selected from between Co, Ni, Fe, Cr, Mg and Al). This spinel type lithium manganese oxide is produced by a method described below.

As the cathode current collector, for instance, an aluminum foil or the like is used.

As a binder contained in the cathode composite mixture layer, a known resin material ordinarily used in such a nonaqueous electrolyte battery can be used. As a specific binder, for instance, polyvinylidene fluoride, etc. may be exemplified.

Further, as a conductive material included in the cathode composite mixture layer, a known type of conductive material generally used in such a nonaqueous electrolyte battery can be employed. As a specific conductive material, for instance, carbon black or the like may be exemplified.

The cathode can 5 serves to accommodate the cathode 4 therein and serves as an external cathode of the nonaqueous electrolyte battery 1.

The separator 6 serves to separate the cathode 4 from the anode 2 and can use a known material ordinarily used as a separator of such a nonaqueous electrolyte battery. For instance, a polymer film such as polypropylene is employed. Further, the thickness of the separator needs to be decreased as much as possible from the viewpoint of the relation between the conductivity of lithium ions and energy density. Specifically, the thickness of the separator is preferably, for instance, 50 µm or smaller.

The insulating gasket 7 is integrally attached to the anode can 3. The insulating gasket 7 serves to prevent the leakage of the nonaqueous electrolyte solution with which the anode can 3 and the cathode can 5 are filled.

As the nonaqueous electrolyte solution, a solution obtained by dissolving electrolyte in a nonaqueous solvent is employed.

As the nonaqueous solvent, can be used, for instance, propylene carbonate, ethylene carbonate, butylene carbonate, vinylene carbonate, γ-butyrolactone, sulfolane, 1, 2-dimethoxyethane, 1, 2-diethoxyethane, 2-methyl tetrahydrofuran, 3-methyl-1, 3-dioxolane, methyl propionate, methyl butyrate, dimethyl carbonate, diethyl carbonate, dipropyl carbonate, etc. Especially, from the viewpoint of voltage stability, cyclic carbonates such as propylene carbonate, vinylene carbonate, etc., and chain carbonates such as dimethyl carbonate, diethyl carbonate, dipropyl carbonate, etc. are preferably used. As the nonaqueous solvent, one kind of solvent may be simply used or the mixture of two kinds or more of solvents may be used.

Further, when conductive ions are lithium ions, for instance, lithium salts such as LiPF₆, LiClO₄, LiAsF₆, LiBF₄, LiCF₃SO₃, LiN(CF₃SO₂)₂, etc. may be employed as the electrolyte dissolved in the nonaqueous solvent. One kind of electrolyte may be individually used or the mixture of two kinds or more of electrolytes may be used.

Now, a method for manufacturing the above described nonaqueous electrolyte battery 1 will be described below.

The excessive amount x of lithium in the spinel type lithium manganese oxide expressed by a general formula: Li₁₊ₓMn_{2-x-y}Me_{y}PO₄ as the cathode active material is preferably smaller than 0.15. When the excessive amount x of lithium is 0.15 or larger, the rate of Mn that occupies the spinel type lithium manganese oxide is relatively decreased, so that a practical capacity cannot be obtained. Further, the amount of replacement y by the different metal Me may be a value smaller than 0.3. When the amount of replacement y by the different metal Me is 0.3 or larger, the rate of Mn that occupies the spinel type lithium manganese oxide is also relatively decreased, so that a practical capacity cannot be obtained. Therefore, the spinel type lithium manganese oxide satisfying a condition that the excessive amount x of lithium is a value smaller than 0.15, and the amount of replacement y by the different metal Me is a value smaller than 0.3 is utilized as the cathode active material, so that the nonaqueous electrolyte battery has a satisfactory capacity.

The above mentioned spinel type lithium manganese oxide can be synthesized in accordance with various kinds of methods. For example, when a Cr replaced spinel type lithium manganese oxide expressed by a general formula: Li₁₊ₓMn_{2-x-y}Cr_{y}O₄ in which Cr is used as the different metal Me is synthesized, initially, manganese dioxide (MnO₂), lithium carbonate (Li₂CO₃) and chromium oxide (Cr₂O₃) are mixed together as raw materials in the prescribed ratio in a mixing step to obtain a precursor.

Then, the precursor obtained in the mixing step is sintered to synthesize the Cr replaced spinel type lithium manganese oxide.

In the present invention, the temperature (refer it to as sintering temperature, hereinafter) at which the precursor is sintered is located within a range of 800°C or higher and 900°C or lower. When the sintering temperature is lower than 800°C, the resultant spinel type lithium manganese oxide exhibits the insufficient improvement of the deterioration of a cathode performance under a temperature environment exceeding room temperature, that is, under an environment of high temperature. On the contrary, when the sintering temperature is higher than 900°C, the resultant spinel type lithium manganese oxide also exhibits the insufficient improvement of the deterioration of the cathode performance under the environment of high temperature. Thus, the sintering temperature is specified to be a range of 800°C or higher and 900°C or lower, so that the spinel type lithium manganese oxide the good cathode performance of which can be maintained even when it is employed under the environment of high temperature can be synthesized. Accordingly, the synthesized spinel type lithium manganese oxide is used as the cathode active material, so that the nonaqueous electrolyte battery 1 excellent in its battery property under the environment of high temperature, especially, excellent in its charging and discharging cyclic characteristics under the environment of high temperature can be manufactured.

Further, the precursor is preferably sintered in atmospheric air. The precursor is sintered in the atmospheric air, hence the deterioration of the performance of the synthesized spinel type lithium manganese oxide under the environment of high temperature is more efficiently improved. Therefore, the spinel type lithium manganese oxide sintered in the atmospheric air is employed as the cathode active material, so that the charging and discharging cyclic characteristics under the environment of high temperature can be more improved.

Even when the different metal Me is metal other than Cr, a spinel type lithium manganese oxide expressed by a general formula: Li₁₊ₓMn_{2-x-y}Me_{y}PO₄ can be synthesized in the same manner as that the above described Cr replaced spinel type lithium manganese oxide is synthesized. Specifically, a compound containing the different metal Me, the above described manganese dioxide (MnO₂) and lithium carbonate (Li₂CO₃) are initially mixed together in the prescribed ratio to obtain a precursor. Then, this precursor is sintered, so that a spinel type lithium manganese oxide expressed by the general formula: Li₁₊ₓMn_{2-x-y}Me_{y}PO₄ is synthesized. As the specific compounds containing the different metal Me, there may be enumerated cobalt oxide (Co₃O₄), nickel hydroxide (Ni(OH)₂), iron oxyhydroxide (FeO(OH)), aluminum hydroxide (Al(OH)₃), magnesium oxide (MgO), etc.

The Cr replaced spinel type lithium manganese oxide using Cr as the different metal Me which is expressed by the general formula: Li₁₊ₓMn_{2-x-y}Cr_{y}O₄ is preferably used as the cathode active material among the spinel type lithium manganese oxides synthesized as described above. The Cr replaced spinel type lithium manganese oxide is employed as the cathode active material, so that the nonaqueous electrolyte battery 1 whose performance deterioration under the environment of high temperature is further suppressed and whose charging and discharging cyclic characteristics are extremely improved can be manufactured.

Now, there will be described a method for manufacturing the nonaqueous electrolyte battery 1 using the spinel type lithium manganese oxide synthesized as described above as the cathode active material.

The spinel type lithium manganese oxide synthesized as mentioned above is completely dispersed together with a binder and a conductive material, etc. in an organic solvent such as dimethyl formamide to prepare cathode composite mixture slurry. This cathode composite mixture slurry is applied to the cathode current collector and dried to manufacture the cathode 4. Further, cathode composite mixture powder obtained by drying and pulverizing the cathode composite mixture slurry may be also subjected to a compression-molding together with the cathode current collector so that the cathode 4 can be formed.

When the anode 2 is manufactured, an anode active material and a binder are firstly dispersed in an organic solvent to prepare an anode composite mixture slurry. Subsequently, the obtained anode composite mixture slurry is uniformly applied to an anode current collector, and the applied anode composite mixture slurry is dried to manufacture the anode 2. As the binder used for the anode composite mixture slurry, a known binder can be employed, and further, a known additive or the like can be added to the anode composite mixture slurry. Further, lithium metal serving as the anode active material may be directly used as the anode 2.

The nonaqueous electrolyte solution is prepared by dissolving electrolyte salt in the nonaqueous solvent.

Then, the anode 2 is accommodated in the anode can 3, the cathode 4 is accommodated in the cathode can 5 and the separator 6 made of polypropylene porous film or the like is interposed between the anode 2 and the cathode 4. The non-aqueous electrolyte solution is injected into the anode can 3 and the cathode can 5 and the anode can 3 and the cathode can 5 are caulked and fixed together through the insulating gasket 7 to complete the nonaqueous electrolyte battery 1.

As described above, when the cathode active material is produced, since the sintering temperature of the precursor is specified to be located within a range of 800°C or higher and 900°C or lower, the spinel type lithium manganese oxide can be synthesized, which can maintain a good cathode performance even when it is continuously employed under the charging voltage of 4V or higher, for example, in the environment of high temperature. Therefore, the above described spinel type lithium manganese oxide is used as the cathode active material, so that the nonaqueous electrolyte battery excellent in its battery property under the environment of high temperature, specially, excellent in its charging and discharging cyclic characteristics under the environment of high temperature can be manufactured.

Further, since the spinel type lithium manganese oxide is synthesized by using as a main material Mn which is inexpensive and abundant in view of resources, it can be produced more comparatively inexpensively than the lithium cobalt oxide. As a consequence, the nonaqueous electrolyte battery whose battery property under the environment of high temperature is improved can be inexpensively manufactured.

While the nonaqueous electrolyte battery manufactured as described above depends on kinds or conditions of the anode active material, etc., it can be used under the high discharging voltage of 3V or higher. Thus, according to the present invention, the nonaqueous electrolyte battery of high output and high energy density can be manufactured.

In the above explanation, although the method for manufacturing a coin type nonaqueous electrolyte battery is described as an example, it is to be noted that the present invention is not limited thereto and may be applied to methods for manufacturing nonaqueous electrolyte batteries having various kinds of configurations, for example, cylindrical types, square or rectangular types, button types, etc.

Further, in the above described embodiment, although the nonaqueous electrolyte solution obtained by dissolving the electrolyte salt as the nonaqueous electrolyte in the nonaqueous solvent is employed as an example, it is to be understood that the present invention is not limited thereto and may be applied to examples that a solid electrolyte or a gel electrolyte containing a swelling solvent is used as the nonaqueous electrolyte.

### EXAMPLES

Now, Examples to which the present invention is applied will be described below in detail on the basis of experimental results.

### Example 1

Initially, Cr replaced spinel type lithium manganese oxide obtained by replacing a part of Mn of LiMn₂O₄ by Cr was synthesized as a cathode active material.

Marketed powder of manganese dioxide (MnO₂), powder of lithium carbonate (Li₂CO₃) and powder of chromium oxide (Cr₂O₃) were mixed together by using an agate mortar. Li, Cr and Mn were mixed in the mixed ratio 1 : 0.2 : 1.8.

The resultant mixed powder was sintered in atmospheric pressure by using an electric furnace so that the Cr replaced spinel type lithium manganese oxide was synthesized. Sintering temperature at this time was set to 800°C. When a sample got by sintering the mixed powder was analyzed by an X-ray diffraction, a profile exactly corresponded to the data of LiMn₂O₄ described in an ISDD card 35-782.

Then, the Cr replaced spinel type lithium manganese oxide as a cathode active material, graphite as a conductive material, and polyvinylidene fluoride as a binder were mixed together, further, dimethyl formamide was properly dropped and they were completely kneaded. The kneaded product was dried and the kneaded product thus dried was pulverized to obtain a cathode composite mixture powder.

Subsequently, the cathode composite mixture powder thus obtained was compression-molded together with an aluminum mesh and the obtained compact was used as a cathode. Further, lithium was punched to the substantially same configuration as that of the cathode to have an anode.

After that, LiPF₆ was dissolved with the concentration of 1 mol/l in a solvent produced by mixing together propylene carbonate and dimethyl carbonate of the same capacity as that of propylene carbonate to prepare nonaqueous electrolyte solution.

The cathode obtained in such a manner was accommodated in a cathode can, the anode was accommodated in an anode can and a separator was interposed between the cathode and the anode. The nonaqueous electrolyte solution was injected into the cathode can and the anode can, and the cathode can and the anode can were caulked and fixed together to manufacture a coin type battery.

### Example 2 to Example 4, Comparative Example 1 and Comparative Example 2

The coin type battery was manufactured in the same manner as that of the Example 1 except that sintering temperature for sintering the mixed powder was set to temperature shown in Table 1 provided below.

### Example 5 to Example 8, Comparative Example 3 and Comparative Example 4

Initially, Co replaced spinel type lithium manganese oxide obtained by replacing a part of Mn of LiMn₂O₄ by Co was synthesized as a cathode active material.

Marketed powder of manganese dioxide (MnO₂), powder of lithium carbonate (Li₂CO₃) and powder of cobalt oxide (Co₃O₄) were mixed together by using an agate mortar. Li, Co and Mn were mixed in the mixed ratio 1 : 0.2 : 1.8.

The resultant mixed powder was sintered in atmospheric pressure by using an electric furnace so that the Co replaced spinel type lithium manganese oxide was synthesized. Sintering temperature at this time was set to temperature shown in the Table 1 described below.

The coin type battery was manufactured in the same manner as that of the Example 1 except that the Co replaced spinel type lithium manganese oxide synthesized as mentioned above was used as the cathode active material.

### Example 9 to Example 11, Comparative Example 5 and Comparative Example 6

Initially, Ni replaced spinel type lithium manganese oxide obtained by replacing a part of Mn of LiMn₂O₄ by Ni was synthesized as a cathode active material.

Marketed powder of manganese dioxide (MnO₂), powder of lithium carbonate (Li₂CO₃) and powder of nickel hydroxide (Ni(OH)₂) were mixed together by using an agate mortar. Li, Ni and Mn were mixed in the mixed ratio 1 : 0.1 : 1.9.

The resultant mixed powder was sintered in atmospheric pressure by using an electric furnace so that the Ni replaced spinel type lithium manganese oxide was synthesized. Sintering temperature at this time was set to temperature shown in the Table 1 described below.

The coin type battery was manufactured in the same manner as that of the Example 1 except that the Ni replaced spinel type lithium manganese oxide synthesized as mentioned above was used as the cathode active material.

### Example 12 to Example 14, Comparative Example 7 and Comparative Example 8

Initially, Fe replaced spinel type lithium manganese oxide obtained by replacing a part of Mn of LiMn₂O₄ by Fe was synthesized as a cathode active material.

Marketed powder of manganese dioxide (MnO₂), powder of lithium carbonate (Li₂CO₃) and powder of iron oxyhydroxide (FeO(OH)) were mixed together by using an agate mortar. Li, Fe and Mn were mixed in the mixed ratio 1 : 0.2 : 1.8.

The resultant mixed powder was sintered in atmospheric pressure by using an electric furnace so that the Fe replaced spinel type lithium manganese oxide was synthesized. Sintering temperature at this time was set to temperature shown in the Table 1 described below.

The coin type battery was manufactured in the same manner as that of the Example 1 except that the Fe replaced spinel type lithium manganese oxide synthesized as mentioned above was used as the cathode active material.

### Example 15 to Example 17, Comparative Example 9 and Comparative Example 10

Initially, Al replaced spinel type lithium manganese oxide obtained by replacing a part of Mn of LiMn₂O₄ by Al was synthesized as a cathode active material.

Marketed powder of manganese dioxide (MnO₂), powder of lithium carbonate (Li₂CO₃) and powder of aluminum hydroxide (Al(OH)₃) were mixed by using an agate mortar. Li, Al and Mn were mixed in the mixed ratio 1 : 0.2 : 1.8.

The resultant mixed powder was sintered in atmospheric pressure by using an electric furnace so that the Al replaced spinel type lithium manganese oxide was synthesized. Sintering temperature at this time was set to temperature shown in the Table 1 described below.

The coin type battery was manufactured in the same manner as that of the Example 1 except that the Al replaced spinel type lithium manganese oxide synthesized as mentioned above was used as the cathode active material.

### Example 18 to Example 20, Comparative Example 11 and Comparative Example 12

Initially, Mg replaced spinel type lithium manganese oxide obtained by replacing a part of Mn of LiMn₂O₄ by Mg was synthesized as a cathode active material.

Marketed powder of manganese dioxide (MnO₂), powder of lithium carbonate (Li₂CO₃) and powder of magnesium oxide (MgO) were mixed together by using an agate mortar. Li, Mg and Mn were mixed in the mixed ratio 1 : 0.1 : 1.9.

The resultant mixed powder was sintered in atmospheric pressure by using an electric furnace so that the Mg replaced spinel type lithium manganese oxide was synthesized. Sintering temperature at this time was set to temperature shown in the Table 1 described below.

The coin type battery was manufactured in the same manner as that of the Example 1 except that the Mg replaced spinel type lithium manganese oxide synthesized as mentioned above was used as the cathode active material.

The coin type battery manufactured as described above was charged to 4.2V with the current density of 0.27 mA/cm² under the condition of room temperature. Then, a constant-voltage charge of 4.2V was continuously carried out until the charge was completed. A charged capacity at this time was measured to consider it to be a first charged capacity. Then, a discharging operation was carried out until discharge voltage became 3.0V. The discharged capacity at this time was measured to consider the discharged capacity to be a first discharged capacity. The rate of the first discharged capacity relative to the first charged capacity was calculated to consider the rate to be a charging and discharging efficiency.

Further, the charging and discharging cycle test of the coin type battery manufactured as described above was carried out under the condition of high temperature. Specifically, the battery was charged to 4.2V with the current density of 0.27 mA/cm² under the condition of 60°C. Then, a constant-voltage charge of 4.2V was continuously carried out until the charge was completed. Then, a discharging operation was performed until discharge voltage became 0.3V. The 20 cycles of the above described charging and discharging operations were carried out to measure the discharged capacity of a 20th cycle. The rate of the discharged capacity of the 20th cycle relative to the first discharged capacity was considered to be a capacity maintaining/retention ratio after the 20th cycle under the temperature of 60°C.

Further, in order to generally evaluate the battery property of the coin type battery, a battery evaluation relative value was calculated in accordance with a formula described below. The coil type battery having a high battery evaluation relative value indicates that it is excellent in its general battery property. Battery evaluation relative value = ((first charged capacity/148) X 2) X ((capacity maintaining/retention ratio after a 20th cycle under the condition of 60°C/100) X 2) X (charging and discharging efficiency/100)

The replaced different metals of the spinel type lithium manganese oxide used as the cathode active material, the sintering temperature, the first charged capacity, the first discharged capacity, the charging and discharging efficiency, the capacity maintaining/retention ratio after the 20th cycle under the condition of 60°C and the battery evaluation relative value in the Examples 1 to 20 and the Comparative Examples 1 to 12 will be shown in the Table 1.

**[Table 1]**

| | Replaced Different Metal Me | Sintering Temperature (°C) | First Charged Capacity (mAh/g) | First Discharged Capacity (mAh/g) |
|---|---|---|---|---|
| Comparative Example 1 | Cr | 750 | 110 | 103 |
| Example 1 | Cr | 800 | 113 | 107 |
| Example 2 | Cr | 825 | 115 | 109 |
| Examp]e 3 | Cr | 850 | 119 | 112 |
| Example 4 | Cr | 900 | 120 | 112 |
| Comparative Example 2 | Cr | 950 | 118 | 110 |
| Comparative Example 3 | Co | 750 | 109 | 102 |
| Example 5 | Co | 800 | 112 | 105 |
| Example 6 | Co | 825 | 115 | 108 |
| Example 7 | Co | 850 | 118 | 111 |
| Example 8 | Co | 900 | 120 | 111 |
| Comparative Example 4 | Co | 950 | 117 | 108 |
| Comparative Example 5 | Ni | 750 | 110 | 102 |
| Example 9 | Ni | 800 | 115 | 108 |
| Example 10 | Ni | 850 | 118 | 111 |
| Example 11 | Ni | 900 | 119 | 110 |
| Comparative Example 6 | Ni | 950 | 117 | 107 |
| Comparative Example 7 | Fe | 750 | 109 | 103 |
| Example 12 | Fe | 800 | 115 | 109 |
| Example 13 | Fe | 850 | 117 | 112 |
| Example 14 | Fe | 900 | 115 | 109 |
| Comparative Example 8 | Fe | 950 | 114 | 107 |
| Comparative Example 9 | Al | 750 | 116 | 108 |
| Example 15 | Al | 800 | 119 | 112 |
| Example 16 | Al | 850 | 122 | 115 |
| Example 17 | Al | 900 | 123 | 115 |
| Comparative Example 10 | Al | 950 | 118 | 109 |
| Comparative Example 11 | Mg | 750 | 117 | 108 |
| Example 18 | Mg | 800 | 119 | 111 |
| Example 19 | Mg | 850 | 121 | 113 |
| Example 20 | Mg | 900 | 120 | 112 |
| Comparative Example 12 | Mg | 950 | 118 | 109 |

| | Charging and Discharging Efficiency (%) | Capacity Maintaining/retention Ratio after 20th Cycle at 60°C (%) | Battery Evaluation Relative Value |
|---|---|---|---|
| Comparative Example 1 | 93.6 | 49 | 1.36 |
| Example 1 | 94.7 | 59 | 1.71 |
| Example 2 | 94.8 | 66 | 1.94 |
| Example 3 | 94.1 | 73 | 2.21 |
| Example 4 | 93.3 | 68 | 2.06 |
| Comparative Example 2 | 93.2 | 45 | 1.34 |
| Comparative Example 3 | 93.6 | 52 | 1.43 |
| Example 5 | 93.8 | 60 | 1.7 |
| Example 6 | 93.9 | 65 | 1.9 |
| Example 7 | 94.1 | 71 | 2.13 |
| Example 8 | 92.5 | 65 | 1.95 |
| Comparative Example 4 | 92.3 | 47 | 1.37 |
| Comparative Example 5 | 92.7 | 48 | 1.32 |
| Example 9 | 93.9 | 58 | 1.69 |
| Example 10 | 94.1 | 62 | 1.86 |
| Example 11 | 92.4 | 60 | 1.78 |
| Comparative Example 6 | 91.5 | 45 | 1.3 |
| Comparative Example 7 | 94.5 | 50 | 1.39 |
| Example 12 | 94.8 | 55 | 1.62 |
| Example 13 | 95.7 | 61 | 1.85 |
| Example 14 | 94.8 | 58 | 1.71 |
| Comparative Example 8 | 93.9 | 49 | 1.42 |
| Comparative Example 9 | 93.1 | 51 | 1.49 |
| Example 15 | 94.1 | 65 | 1.97 |
| Example 16 | 94.3 | 70 | 2.18 |
| Example 17 | 93.5 | 65 | 2.02 |
| Comparative Example 10 | 92.4 | 49 | 1.44 |
| Comparative Example 11 | 92.3 | 49 | 1.43 |
| Example 18 | 93.3 | 59 | 1.77 |
| Example 19 | 93.4 | 62 | 1.89 |
| Example 20 | 93.3 | 60 | 1.82 |
| Comparative Example 12 | 92.4 | 50 | 1.47 |

Initially, an example in which the Cr replaced spinel type lithium manganese oxide is employed as the cathode active material is examined.

From the results of the Table 1, it was understood that the capacity maintaining/retention ratio after the 20th cycle under the condition of 60°C in the Examples 1 to 4 was outstandingly improved as compared with the Comparative Example 1 in which the sintering temperature was 750°C and the Comparative Example 2 in which the sintering temperature was 950°C. Further, it was found that the battery evaluation relative value greatly exceeded 1.5 and the general battery property was also excellent in the Examples 1 to 4.

It was apparent from these facts that the sintering temperature was located within a range of 800°C or higher and 900°C or lower when the Cr replaced spinel type lithium manganese oxide was synthesized so that the coin type battery became excellent in its general battery property and in its charging and discharging cyclic characteristics under the environment of high temperature.

The Example 3 showed the most excellent value respectively in the items of the capacity maintaining/retention ratio after the 20th cycle under the condition of 60°C and the battery evaluation relative value among these Examples. It was understood from this fact that the sintering temperature when the Cr replaced spinel type lithium manganese oxide was synthesized was especially preferably set to 850°C.

Then, an example in which the Co replaced spinel type lithium manganese oxide is employed as the cathode active material is examined.

From the results of the Table 1, it was understood that the capacity maintaining/retention ratio after the 20th cycle under the condition of 60°C in the Examples 5 to 8 was outstandingly improved as compared with the Comparative Example 3 in which the sintering temperature was 750°C and the Comparative Example 4 in which the sintering temperature was 950°C. Further, it was found that the battery evaluation relative value greatly exceeded 1.5 and the general battery property was also excellent in the Examples 5 to 8.

It was apparent from these facts that the sintering temperature was located within a range of 800°C or higher and 900°C or lower when the Co replaced spinel type lithium manganese oxide was synthesized so that the coin type battery became excellent in its general battery property and in its charging and discharging cyclic characteristics under the environment of high temperature.

The Example 7 showed the most excellent value respectively in the items of the capacity maintaining/retention ratio after the 20th cycle under the condition of 60°C and the battery evaluation relative value among these Examples. It was understood from this fact that the sintering temperature when the Co replaced spinel type lithium manganese oxide was synthesized was especially preferably set to 850°C.

Then, an example in which the Ni replaced spinel type lithium manganese oxide is employed as the cathode active material is examined.

From the results of the Table 1, it was understood that the capacity maintaining/retention ratio after the 20th cycle under the condition of 60°C in the Examples 9 to 11 was outstandingly improved as compared with the Comparative Example 5 in which the sintering temperature was 750°C and the Comparative Example 6 in which the sintering temperature was 950°C. Further, it was found that the battery evaluation relative value greatly exceeded 1.5 and the general battery property was also excellent in the Examples 9 to 11.

It was apparent from these facts that the sintering temperature was located within a range of 800°C or higher and 900°C or lower when the Ni replaced spinel type lithium manganese oxide was synthesized so that the coin type battery became excellent in its general battery property and in its charging and discharging cyclic characteristics under the environment of high temperature.

The Example 10 showed the most excellent value respectively in the items of the capacity maintaining/retention ratio after the 20th cycle under the condition of 60°C and the battery evaluation relative value among these Examples. It was understood from this fact that the sintering temperature when the Ni replaced spinel type lithium manganese oxide was synthesized was especially preferably set to 850°C.

Next, an example in which the Fe replaced spinel type lithium manganese oxide is employed as the cathode active material is examined.

From the results of the Table 1, it was understood that the capacity maintaining/retention ratio after the 20th cycle under the condition of 60°C in the Examples 12 to 14 was outstandingly improved as compared with the Comparative Example 7 in which the sintering temperature was 750°C and the Comparative Example 8 in which the sintering temperature was 950°C. Further, it was found that the battery evaluation relative value greatly exceeded 1.5 and the general battery property was also excellent in the Examples 12 to 14.

It was apparent from these facts that the sintering temperature was located within a range of 800°C or higher and 900°C or lower when the Fe replaced spinel type lithium manganese oxide was synthesized so that the coin type battery became excellent in its general battery property and in its charging and discharging cyclic characteristics under the environment of high temperature.

The Example 13 showed the most excellent value respectively in the items of the capacity maintaining/retention ratio after the 20th cycle under the condition of 60°C and the battery evaluation relative value among these Examples. It was understood from this fact that the sintering temperature when the Fe replaced spinel type lithium manganese oxide was synthesized was especially preferably set to 850 °C.

Then, an example in which the Al replaced spinel type lithium manganese oxide is employed as the cathode active material is examined.

From the results of the Table 1, it was understood that the capacity maintaining/retention ratio after the 20th cycle under the condition of 60°C in the Examples 15 to 17 was outstandingly improved as compared with the Comparative Example 9 in which the sintering temperature was 750°C and the Comparative Example 10 in which the sintering temperature was 950°C. Further, it was found that the battery evaluation relative value greatly exceeded 1.5 and the general battery property was also excellent in the Examples 15 to 17.

It was apparent from these facts that the sintering temperature was located within a range of 800°C or higher and 900°C or lower when the Al replaced spinel type lithium manganese oxide was synthesized so that the coin type battery became excellent in its general battery property and in its charging and discharging cyclic characteristics under the environment of high temperature.

The Example 16 showed the most excellent value respectively in the items of the capacity maintaining/retention ratio after the 20th cycle under the condition of 60°C and the battery evaluation relative value among these Examples. It was understood from this fact that the sintering temperature when the Al replaced spinel type lithium manganese oxide was synthesized was especially preferably set to 850°C.

Then, an example in which the Mg replaced spinel type lithium manganese oxide is employed as the cathode active material is examined.

From the results of the Table 1, it was understood that the capacity maintaining/retention ratio after the 20th cycle under the condition of 60°C in the Examples 18 to 20 was outstandingly improved as compared with the Comparative Example 11 in which the sintering temperature was 750°C and the Comparative Example 12 in which the sintering temperature was 950°C. Further, it was found that the battery evaluation relative value greatly exceeded 1.5 and the general battery property was also excellent in the Examples 18 to 20.

It was apparent from these facts that the sintering temperature was located within a range of 800°C or higher and 900°C or lower when the Mg replaced spinel type lithium manganese oxide was synthesized so that the coin type battery became excellent in its general battery property and in its charging and discharging cyclic characteristics under the environment of high temperature.

The Example 19 showed the most excellent value respectively in the items of the capacity maintaining/retention ratio after the 20th cycle under the condition of 60°C and the battery evaluation relative value among these Examples. It was understood from this fact that the sintering temperature when the Mg replaced spinel type lithium manganese oxide was synthesized was especially preferably set to 850°C.

It was recognized from these results that the spinel type lithium manganese oxide expressed by the general formula: Li₁₊ₓMn_{2-x-y}Me_{y}PO₄ was synthesized at the sintering temperature located within a range of 800°C or higher and 900°C or lower, even when any kind of different metal Me was employed, and accordingly, the coin type battery whose performance deterioration was suppressed could be manufactured.

Specially, it was understood that the sintering temperature was set to 850°C so that the deterioration of performance under the environment of high temperature could be greatly suppressed.

Further, it was found that the Cr replaced spinel type lithium manganese oxide using Cr as the different metal Me was used as the cathode active material so that the deterioration of performance of the nonaqueous electrolyte battery was more suppressed under the environment of high temperature.

As apparent from the above description, according to the method for producing the cathode active material of the present invention, since the sintering temperature is specified to be located within a range of 800°C or higher and 900°C or lower, the spinel type lithium manganese oxide the good cathode performance of which is maintained can be obtained even it is employed under the environment of temperature exceeding room temperature. Therefore, according to the present invention, when the spinel type lithium manganese oxide is used as the cathode active material of the nonaqueous electrolyte battery, the cathode active material which maintains a good cathode performance can be inexpensively produced.

Further, according to the method for manufacturing the nonaqueous electrolyte battery of the present invention, the spinel type lithium manganese oxide synthesized by using the sintering temperature specified to be located within a range of 800°C or higher and 900°C or lower is used as the cathode active material. Therefore, according to the present invention, the nonaqueous electrolyte battery excellent in its battery property under the environment of high temperature, especially, excellent in its charging and discharging cyclic characteristics under the environment of high temperature can be inexpensively manufactured.

## Claims

1. A method for producing a cathode active material which produces a spinel type lithium manganese oxide expressed by a general formula Li₁₊ₓMn_{2-x-y}Me_{y}PO₄, as the cathode active material, where x is expressed by a relation of 0 ≤ x < 0.15 and y is expressed by a relation of 0 < y < 0.3, and Me is at least one kind of element selected from a group consisting of Co, Ni, Fe, Cr, Mg and Al, the method comprising:
a mixing step of mixing raw materials of the spinel type lithium manganese oxide to obtain a precursor; and
a sintering step of sintering the precursor obtained in the mixing step to obtain the spinel type lithium manganese oxide; wherein sintering temperature in the sintering step is located within a range of 800°C or higher and 900°C or lower.

2. The method for producing the cathode active material according to claim 1, wherein the sintering step is carried out in atmospheric air.

3. The method for producing the cathode active material according to claim 1, wherein the cathode active material is LiMn_{1.8}Cr_{0.2}O₄.

4. The method for producing the cathode active material according to claim 1, wherein the cathode active material is LiMn_{1.8}Co_{0.2}O₄.

5. The method for producing the cathode active material according to claim 1, wherein the cathode active material is LiMn_{1.9}Ni_{0.1}O₄.

6. The method for producing the cathode active material according to claim 1, wherein the cathode active material is LiMn_{1.8}Fe_{0.2}O₄.

7. The method for producing the cathode active material according to claim 1, wherein the cathode active material is LiMn_{1.8}Al_{0.2}O₄.

8. The method for producing the cathode active material according to claim 1, wherein the cathode active material is LiMn_{1.9}Mg_{0.1}O₄.

9. A method for manufacturing a nonaqueous electrolyte battery including a cathode having a spinel type lithium manganese oxide expressed by a general formula Li₁₊ₓMn_{2-x-y}Me_{y}PO₄ serving as a cathode active material, where, x is expressed by a relation of 0 ≤ x < 0.15 and y is expressed by a relation of 0 < y < 0.3, and Me is at least one kind of element selected from a group consisting of Co, Ni, Fe, Cr, Mg and Al, an anode, and an electrolyte, the method comprising:
a mixing step of mixing raw materials of the spinel type lithium manganese oxide to obtain a precursor; and
a sintering step of sintering the precursor obtained in the mixing step to obtain the spinel type lithium manganese oxide; wherein sintering temperature in the sintering step is located within a range of 800°C or higher and 900°C or lower.

10. The method for manufacturing the nonaqueous electrolyte battery according to claim 9, wherein the sintering step is carried out in atmospheric air.

11. The method for manufacturing the nonaqueous electrolyte battery according to claim 9, wherein the cathode active material is LiMn_{1.8}Cr_{0.2}O₄.

12. The method for manufacturing the nonaqueous electrolyte battery according to claim 9, wherein the cathode active material is LiMn_{1.8}Co_{0.2}O₄.

13. The method for manufacturing the nonaqueous electrolyte battery according to claim 9, wherein the cathode active material is LiMn_{1.9}Ni_{0.1}O₄.

14. The method for manufacturing the nonaqueous electrolyte battery according to claim 9, wherein the cathode active material is LiMn_{1.8}Fe_{0.2}O₄.

15. The method for manufacturing the nonaqueous electrolyte battery according to claim 9, wherein the cathode active material is LiMn_{1.8}Al_{0.2}O₄.

16. The method for manufacturing the nonaqueous electrolyte battery according to claim 9, wherein the cathode active material is LiMn_{1.9}Mg_{0.1}O₄.

17. The method for manufacturing the nonaqueous electrolyte battery according to claim 9, wherein an anode active material contained in the anode is a lithium aluminum alloy, a carbonaceous material capable of doping or dedoping lithium ions, and lithium metal.
